# EUROPÄISCHE PATENTSCHRIFT

(11) **EP 1 179 149 B1**
(45) Veröffentlichungstag und Bekanntmachung des Hinweises auf die Patenterteilung: **08.01.2003**
(21) Anmeldenummer: 00909363.4
(22) Anmeldetag: 15.03.2000
(51) Int. Cl.: F16J 15/00, F16J 15/46, F15B 15/14

(54) **DICHTUNGSVORRICHTUNG FÜR EINEN MIT DRUCKMITTEL BEAUFSCHLAGTEN KOLBEN IN EINEM ARBEITSZYLINDER**
SEALING DEVICE FOR A PISTON WHICH IS SUBJECTED TO THE ACTION OF A PRESSURE MEDIUM AND WHICH IS ARRANGED IN A WORKING CYLINDER
DISPOSITIF D'ETANCHEITE POUR UN PISTON SOUMIS A L'ACTION D'UN FLUIDE SOUS PRESSION DANS UN CYLINDRE DE TRAVAIL

(30) Priorität: 19.05.1999 DE 19922957; 10.06.1999 DE 19926450; 25.01.2000 DE 10003075
(43) Veröffentlichungstag der Anmeldung: 13.02.2002
(73) Patentinhaber: LOG Hydraulik GmbH, 84051 Unterahrain (DE)
(72) Erfinder: Oberhauser, Ludwig, 84051 Unterahrain (DE)
(74) Vertreter: Kruspig, Volkmar, Dipl.-Ing.
(86) Internationale Anmeldenummer: EP0002301
(87) Internationale Veröffentlichungsnummer: WO00071913

(56) Entgegenhaltungen:
- EP-A- 0 142 236
- DE-A- 2 430 573
- DE-A- 2 614 263
- DE-A- 3 321 084
- DE-A- 3 517 137
- DE-A- 19 806 882
- US-A- 3 599 991

## Beschreibung

Die Erfindung betrifft eine Dichtungsvorrichtung für einen mit Druckmittel beaufschlagten Kolben in einem Arbeitszylinder, wobei im oder am Arbeitszylinder eine Kolbenstangenführung angeordnet ist und die Stangenführung ringförmige Ausnehmungen aufweist sowie in den Ausnehmungen jeweils elastische Dichtringe sowie Führungsmittel befindlich sind, gemäß Oberbegriff des Patentanspruchs 1 oder 3.

Aus der deutschen Offenlegungsschrift DT 26 14 263 ist eine dynamisch nachstellbare Dichtungs- und Führungsvorrichtung für Kolben und Kolbenstangen mit mindestens zwei in axialer Richtung hintereinander angeordneten Kammerungsringen und mindestens einem zwischen diesen liegenden Dichtring aus elastischem Material bekannt.

Der Kolben besitzt in Längsrichtung ausgebildete Vor- und Rücksprünge, die von einem Führungsring umgeben sind. Zwischen den Führungsringen verbleibt ein Raum zur Aufnahme eines Dichtrings. Der Dichtring stützt sich zu einer Nut im Kolben über einen weiteren elastischen Ring ab, so daß eine gewisse Nachstellbarkeit bedingt durch die Elastizität des weiteren Ringes gegeben ist.

Die Führungs- und Dichtungsvorrichtung für einen mit Druckmittel beaufschlagten Kolben in einem Arbeitszylinder nach dem deutschen Patent DE 24 30 573 C3 soll zur Optimierung des Abdichtens und zur Verschleißminimierung eine axiale Verschiebung der Führungsringe verhindern. Hierfür wird von dem an sich bekannten Formschluß durch Nut und Bund bei Kolbendichtungen Gebrauch gemacht. Dabei soll die nachteilige Stauchung der Führungsringe vermieden, andererseits aber die Abdichtung zwischen den Ringen und dem Kolben erhöht werden. Durch Öffnungen im Kolben soll der am Spreizring erforderliche Druckaufbau möglich werden.
Beim Arbeitshub wird gemäß der bekannten Lehre durch die Öffnungen auf vorgesehene Schrägflächen eine Druckkraft eingeleitet. Der Druck wird durch den vorgesehenen elastischen Ring nach oben umgelenkt, wodurch alle weiteren Ringe in Richtung einer nicht dargestellten Zylinderlauffläche vorspannbar sind.

Auch wurde durch die Firma Hunger DFE GmbH, Würzburg, ein extern vorspannbares Dichtsystem vorgestellt.
Bei diesem Stangendichtsystem besitzt der Dichtkörper einen eingearbeiteten Druckkanal, über den die Dichtung bei Bedarf mittels einer Anpreßvorrichtung zusätzlich vorgespannt werden kann.
Hierfür wird der Dichtkörper von einer Kanüle durchstoßen und zusätzliches Druckmedium fest einstellbar aus der Vorspannvorrichtung in den Dichtkörper gefördert. Damit soll die Abstimmung des Gleit- bzw. Dichtverhaltens der Dichtelemente im eingebauten Hydraulikzylinder vorgenommen werden können, und hierbei geringste zum Abdichten nötige Dichtungsvorspannung einstellbar sein. Die Vorspannung kann nach langer Einsatzdauer durch Verschleiß oder Ermüdung beeinflußt über die Vorspanneinheit zu einem späteren Zeitpunkt verändert, d.h. vergrößert werden, um die Standzeit des Dichtsystems zu erhöhen. Als Anwendungsgebiet für das vorgestellte extern vorspannbare Dichtsystem sind Hydraulikzylinder in Maschinen und Anlagen, wie z.B. Pressenzylinder, Walzwerkzylinder, Stahlwasserbauzylinder und weitere bekannt.

Insbesondere die zitierte Lösung des extern vorspannbaren Dichtsystems der Firma Hunger DFE GmbH erfordert einen speziellen Dichtring mit dem notwendigen Druckkanal sowie eine aufwendige Spannvorrichtung mit Kanüle und Druckgefäß. Damit ist die bekannte Anordnung insgesamt teuer und als Notlauf oder quasi Reservedichteinrichtung nicht, zumindest nicht kostengünstig einsetzbar.

Die gattungsbildende DE 33 21 084 A1 zeigt eine Dichtungsvorrichtung für einen mit Druckmittel beaufschlagten Kolben in einem Arbeitszylinder, wobei im oder am Arbeitszylinder eine Kolbenstangenführung angeordnet ist und die Stangenführung ringförmige Ausnehmungen aufweist. In den Ausnehmungen sind elastische Dichtringe sowie Führungsmittel befindlich.

Eine weitere Nut dient der Aufnahme eines weiteren elastischen Dichtrings. Auf diesen elastischen Dichtring kann im Bedarfsfall von außen radial zur Kolbenstange eine Kraft aufgebracht werden, um den Dichtring von einer Ruheposition zur Dichtposition hin zu bewegen bzw. zu verformen. Bei dieser Lösung sind die notwendigen Kräfte zur Verformung der zusätzlichen Dichtung sehr hoch und der Demontageaufwand beim Auswechseln defekter Dichtringe zeit- und kostenaufwendig.

Es hat sich gezeigt, daß beispielsweise bei sogenannten hydraulischen Oberkolbenpressen im Reparaturfall bei Austausch eines der Hydraulikzylinder bzw. der Hydraulikkolben ein oberes Hydraulikölgefäß vollständig geleert werden muß. Auch nach dem Leeren des Hydraulikvorratsgefäßes verbleibt im Kolbenvolumen Restöl nicht zu vernachlässigender Menge, das bei der Demontage des jeweiligen Hydraulikzylinders aufgefangen werden muß und hierbei die Arbeiten erheblich erschwert. Für den vorstehend geschilderten Fall wäre es wünschenswert, die Möglichkeit einer zusätzlichen Abdichtung zu schaffen, um beschädigte Primärdichtungen, die sich in der Kolbenstangenführung befinden, austauschen zu können. Des weiteren sollte die Möglichkeit bestehen, über einen gewissen Zeitraum zusätzliche Dichtungen zu aktivieren, um Notlaufeigenschaften entsprechender Maschinen und Einrichtungen, die Hydraulikzylinder verwenden, sicherzustellen.

Aus dem Vorgenannten ist es daher Aufgabe der Erfindung, eine weitergebildete Dichtungsvorrichtung für einen mit Druckmittel beaufschlagten Kolben in einem Arbeitszylinder anzugeben, wobei im oder am Arbeitszylinder eine an sich bekannten Kolbenstangenführung angeordnet ist und die Stangenführung ringförmige Ausnehmungen aufweist sowie in den Ausnehmungen jeweils elastische Primärdichtringe sowie Führungsmittel befindlich sind und wobei die Vorrichtung über die Möglichkeit verfügt, im Not- und/oder Reparaturfall Notlaufeigenschaften zu gewährleisten, ohne daß auf aufwendige Spezialdichtungen oder umfangreiche konstruktive Änderungen im Hydraulikzylindersystem zurückgegriffen werden muß. Weiterhin soll gewährleistet sein, daß der anstehende Hydraulikdruck selbst für ein Aktivieren einer Notlauf-Dichtung sorgt.

Die Lösung der Aufgabe der Erfindung erfolgt mit einer Dichtungsvorrichtung gemäß den Merkmalen, wie sie im Patentanspruch 1 oder 3 definiert sind.
Die Unteransprüche umfassen zweckmäßige Ausgestaltungen und Weiterbildungen.

Der eingesetzte elastische Dichtring soll ein Standardring einfachster Bauart, z.B. ein sogenannter O-Ring sein, der kostengünstig verfügbar ist. Dadurch, daß an den weiteren Dichtring nur relativ geringe Anforderungen bezüglich der Langzeitstabilität zu stellen sind, ist es nicht notwendig, auf teure Spezialmaterialien zurückzugreifen.

Bei einer ersten Ausführungsform befindet sich der zusätzlich vorgesehene Zylinderring in einer umlaufenden Ausnehmung in der Stangenführung, und zwar an deren oberen Ende. Der Zylinderring stellt ein Tragteil dar, das den elastischen Dichtring mindestens teilweise aufnimmt, andererseits aber bei Krafteinwirkung ein seitliches Heraustreten des elastischen Dichtrings in Richtung Kolbenstange ermöglicht.

Das Tragteil ist in Kolbenstangen-Axialrichtung verstellbar und nimmt hier den weiteren elastischen Dichtring mit und preßt diesen an eine gegenüberliegende Anschlagfläche, so daß sich das gewünschte Verformen des Dichtrings und das Anpressen oder Drücken gegen die Oberfläche der Kolbenstange ergibt.

Die erwähnte Anschlagfläche kann Teil eines Einsatzstücks zur Aufnahme einer der Kolbenstangen-Führungsbänder sein, so daß sich der zusätzliche konstruktive Aufwand in vertretbarem Rahmen bewegt.

Für den bevorzugten Einsatzfall bei einer hydraulischen Oberkolbenpresse befindet sich in der Stangenführung eine Menge von verschließbaren Zugangsbohrungen, die jeweils die Betätigung eines Schraubbolzens ermöglichen, mit dessen Hilfe das Tragteil zum Zylindergestell hin bewegt werden kann.

In dem Fall, wenn die Stangenführung zu Austauschzwecken z.B. der Primärdichtungen demontiert werden muß, wird zunächst das Tragteil über die Schraubbolzenverbindung zur Anschlagfläche bewegt, so daß sich die weitere Dichtung von einer Ruheposition in die Dichtposition hin zur Kolbenstange bewegt. Damit ist der Arbeitsraum des Hydraulikzylinders sicher verschlossen und es kann die Stangenführung entnommen werden. Im Arbeitsraum verbleibendes Hydrauliköl oder dergleichen Flüssigkeit muß nicht entfernt, aufgefangen und/oder entsorgt werden, so daß sich die Reparaturzeiten verkürzen und der Reparaturaufwand verringert.
Selbstverständlich besteht auch die Möglichkeit, die weitere Dichtung im Betriebsfall zur Sicherung von Notlaufeigenschaften zu aktivieren, indem eine entsprechende Verstellung des Tragteils vorgenommen wird, so daß zumindest eine mit derarten Hydraulikzylindern versehene Maschine noch über eine gewisse Zeit verfüg- und damit einsetzbar ist.

Bei einer zweiten Ausführungsform ist die Nut als Ringkanal in der Stangenführung oder bei einer dritten Ausführungsform in einem Ringtragteil oberhalb der Stangenführung und mit dieser verbunden ausgebildet. Die Nut stellt hier einen Ringkanal dar, der eine Tiefe zur vollständigen Aufnahme des weiteren Dichtrings aufweist.

Vom Ringkanal im wesentlich radial nach außen gerichtet erstreckt sich ein Medienzuführkanal, wobei dieser am äußeren Ende einen Medienanschluß besitzt, um über ein geeignetes fluides Medium den im Ringkanal befindlichen Dichtring bedarfsweise von seiner Ruheposition zur Dichtposition zu bewegen und gegen die Oberfläche der Kolbenstange, aber auch umgekehrt zu drücken bzw. zu bewegen. Für die Rückbewegung kann am Medienanschluß ein Vakuum angelegt werden.

Der vorerwähnte Medienzuführkanal ist durch das Zylindergestell führbar, wobei in diesem Fall am Zylindergestell der Medienanschluß ausgebildet ist. Der Medienanschluß kann ein Standardsteck- oder -schraubanschluß zum Zuführen von unter Druck stehenden fluiden Medien sein.

Insbesondere bei der zweiten und dritten Ausführungsform besteht die Möglichkeit, einen elastischen Dichtring zu verwenden, der einen vorgespannten Stahlfederring aufweist, wobei der Stahlfederring dafür Sorge trägt, daß im unbelasteten Zustand der Dichtring bestrebt ist, sich nach außen, d.h. weg von der Dichtposition zu bewegen. Dann, wenn mit Druckbeaufschlagung die Vorspannung des Stahlfederrings überwunden wurde, wird der Dichtring von der Ruheposition in die Dichtposition bewegt und entsprechend verformt.

Der bei den Ausführungsbeispielen erwähnte Zylinderring oder das Ringtragteil umgibt die Kolbenstange beabstandet konzentrisch und ist gemeinsam mit der Stangenführung am oder im Arbeitszylinder montiert.

Erfindungsgemäß ist die weitere Nut als konische Ringnut ausgebildet, wobei die Breite der Ringnut am kolbenstangennahen Ende kleiner als die Breite am kolbenstangenfernen Ende ist.

Die konische Ringnut steht dann mit einem Kanal in Verbindung, welcher in einen Raum enthaltend ein Rückschlagventil mündet. Das Rückschlagventil verschließt eine Raumöffnung federbelastet nach außen. Die Raumöffnung führt in eine Kammer oder geht in eine solche Kammer über, die mit unter Betriebsdruck stehender Hydraulikflüssigkeit als Druckmittel füllbar ist, wobei die Zuführung der Hydraulikflüssigkeit in die Kammer über ein z.B. Kugelventil, das in eine Bohrung verschraubt einbringbar ist, abgesperrt werden kann.

Dadurch, daß die Kammer über die Zuführung mit Hydraulikflüssigkeit bei geöffnetem Ventil sich füllt, baut sich gegen das Rückschlagventil unter Überwindung der Ventilschließkraft ein Druck auf. Damit strömt die Hydraulikflüssigkeit zum kolbenstangenfernen Ende der konischen Ringnut. Aufgrund der konischen Ausführungsform der Nut ist bei gegebenen Druckverhältnissen die in Richtung Kolbenstange sich aufbauende Kraft groß genug, um ein Anpressen und Abdichten des weiteren elastischen Dichtrings zur Oberfläche der Kolbenstange zu erreichen.
Bei dieser Ausführungsform wird also der Betriebshydraulikdruck genutzt, um die Notlaufdichtung in Form eines O-Rings zu aktivieren, wobei die Gestalt der Ringnut für entsprechende, ausreichende Preßkräfte des Ringes sorgt.

Wie dargelegt, kann die Druckvorrichtung, d.h. der zusätzliche Dichtring in einer umlaufenden Nut der üblichen Stangenführung untergebracht werden, um eine Verwendung als zusätzliche Notlauf-Dichtung zu ermöglichen. Hierbei wird in der vorstehend beschriebenen Weise über einen Medienzuführkanal mit entsprechendem Medienanschluß der Dichtring mit Druckbeaufschlagung aktiviert und in die Dichtposition überführt. Besondere Einsatzfälle sind hier Zylinderanordnungen an Geräten oder Einrichtungen, wo eine plötzliche Leckage in Notfällen eine bestimmte Zeit überbrückt werden muß, wie z.B. Fahrwerke von Luftfahrzeugen, Wassersperrbauwerke mit hydraulischen Verstelleinrichtungen, Positionsmaschinen mit Hydraulikzylindern und weitere mehr.

Grundsätzlich gilt, daß in Ruhestellung zwischen dem zusätzlichen Dichtring und der Kolbenstange ein Spalt verbleibt. Durch diesen Spalt ist sichergestellt, daß z.B. bei einer Beschädigung der Kolbenstange diese Beschädigung nicht zu einer unerwünschten Oberflächenveränderung des Notlauf-Dichtrings führt, da eben kein Kontakt zwischen Dichtring und Kolbenstange besteht. Bei Beschädigung der Kolbenstange kann diese, z.B. durch Beschleifen der Oberfläche repariert werden, wobei der Dichtring von der Bereitschaftsstellung in die Funktionsstellung überführt wird und dann die gewünschten Notlauf-Eigenschaften sicherstellt. Mit anderen Worten besteht im normalen Betrieb kein Oberflächenkontakt zwischen dem zusätzlichen Dichtring und der Kolbenstange, so daß auch kein Verschleiß des Dichtrings eintritt.

Die Erfindung soll nachstehend anhand von Ausführungsbeispielen sowie unter Zuhilfenahme von Figuren näher erläutert werden.

Hierbei zeigen:
- Fig. 1: eine erste Ausführungsform mit Quetschdichtung und Schraubbolzen;
- Fig. 2: eine Detaildarstellung des Aufbaus der Dichtungsvorrichtung gemäß Fig. 1;
- Fig. 3: eine zweite Ausführungsform mit einem durch ein fluides Medium bewegbaren bzw. verformbaren weiteren Dichtring;
- Fig. 4: eine Detaildarstellung der Ausführungsform nach Fig. 3;
- Fig. 5: eine dritte Ausführungsform ähnlich wie diejenige in ihrer Darstellung nach Fig. 3, jedoch mit einem Dichtring, welcher eine Stahlfedereinlage besitzt;
- Fig. 6: eine Detaildarstellung der Vorrichtung nach Fig. 5;
- Fig. 7: eine weitere Teildarstellung eines Ausführungsbeispiels mit einem zusätzlichen Notlauf-Dichtring in einem Kanal in der Stangenführung;
- Fig. 8: ein Ausführungsbeispiel einer hydraulischen Oberkolbenpresse mit der Dichtungsvorrichtung gemäß der ersten Ausführungsform;
- Fig. 9: ein Ausführungsbeispiel mit einer konisch verlaufenden Ringnut zur Aufnahme eines weiteren Dichtrings in Bereitschaftsstellung;
- Fig. 10: ein Ausführungsbeispiel wie in Fig. 9 gezeigt, jedoch in Funktionsstellung mit geöffnetem Absperrventil; und
- Fig. 11: eine prinzipielle Darstellung der konischen Ringnut mit sich beim Druckaufbau ergebender Verformung des elastischen Dichtrings.

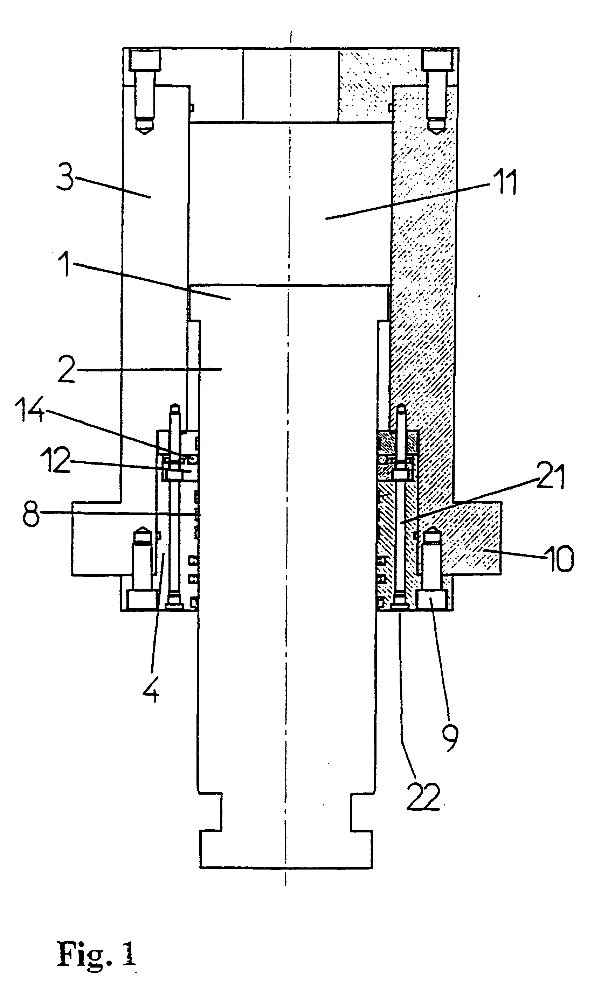

Die Fig. 1 zeigt in prinzipieller Darstellung einen an sich bekannten Hydraulikzylinder, welcher gemäß der ersten Ausführungsform eine spezielle Quetschdichtung zum Gewährleisten von Notlaufeigenschaften, aber auch für Reparaturzwecke, d.h. für den Austausch der Kolbenstangenführung oder dort vorgesehenen Dichtungen besitzt.

Der Kolben 1 mit Kolbenstange 2 ist längsverschieblich in einem Arbeitszylinder 3 angeordnet.

Der Arbeitszylinder 3 weist eine Kolbenstangenführung 4 auf, die über mehrere ringförmige Ausnehmungen 5 verfügt, in die elastische Dichtringe 6, ein Ölabstreifring 7 und Führungsbänder 8 eingesetzt sind. Eine Schraubverbindung 9 fixiert die Kolbenstangenführung 4 am Gestell bzw. einen am Arbeitszylinder 3 vorgesehenen umlaufenden Flansch 10.

Für den Fall, daß bedingt durch Undichtigkeiten die Kolbenstangenführung 4 bei bekannten Hydraulikzylindern ausgetauscht werden muß, ist es zunächst erforderlich, Hydrauliköl aus einem nicht dargestellten Ölvorratsbehälter zu entfernen und gleichfalls für das Absaugen von Hydraulikölresten aus dem Arbeitsraum 11 Sorge zu tragen. Es hat sich jedoch gezeigt, daß ein solches Entfernen nicht vollständig bzw. nur mit erhöhtem Aufwand möglich ist mit der Folge, daß mit demontierter Kolbenstangenführung 4 und beim Entfernen des Kolbens mit Kolbenstange 1; 2 Öl austritt, was insbesondere z.B. bei hydraulischen Oberkolbenpressen problematisch ist.

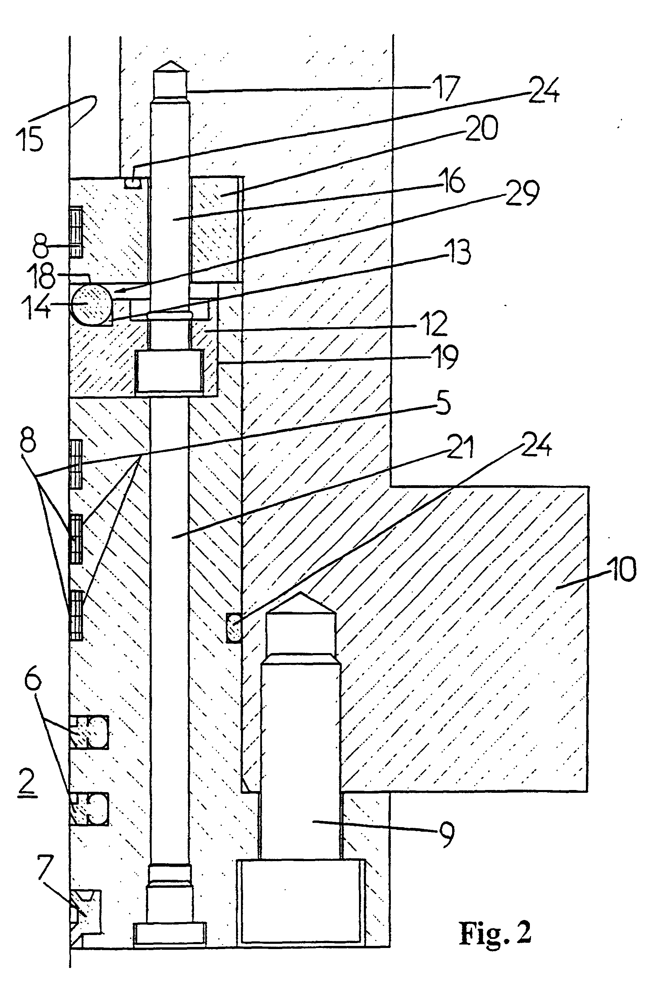

Um diesem Problem zu begegnen, wird nun vorgeschlagen, oberhalb der Kolbenstangenführung 4 einen konzentrischen Zylinderring als Tragteil vorzusehen, wobei der konzentrische Zylinderring 12 bzw. das Tragteil eine Nut 13 zur Aufnahme eines weiteren quasi Reservedichtrings 14 besitzt. Der weitere elastische Dichtring befindet sich, wie in der Fig. 2 erkennbar, grundsätzlich in einer Ruheposition, d.h. es besteht kein Oberflächenkontakt zwischen dem Dichtring 14 und der Oberfläche 15 der Kolbenstange 2, so daß auch nach einer behobenen Beschädigung der Kolbenstange eine einwandfreie unverletzte Notdichtung zur Verfügung steht.

Des weiteren macht die Fig. 2 deutlich, wie mit Hilfe von Schraubbolzen 16 und entsprechenden Gewindebohrungen 17 im Arbeitszylinder 3 das Tragteil 12 in Längsrichtung zur einer Anschlagfläche 18 bewegt werden kann.

Durch diese Bewegung erfolgt ein Verformen des elastischen Dichtrings 14 und ein Inkontaktbringen des letzteren mit der Oberfläche 15 der Kolbenstange 2, so daß ein gewünschter Dichteffekt gegeben ist.

Damit dient der konzentrische Zylinderring 12 bzw. das Tragteil in Verbindung mit Schraubbolzen 16 und Gewindebohrung 17 dem Ausüben einer Kraft auf den elastischen Dichtring 14, um diesen von der normalen, d.h. Ruheposition 29 in eine Dichtposition zu überführen.

Es sei an dieser Stelle noch angemerkt, daß der konzentrische Zylinderring 12 in einer umlaufenden Ausnehmung 19 in der Stangenführung 4 seinen Sitz hat, so daß eine gemeinsame Montage von Kolbenstangenführung 4, konzentrischem Dichtring 12 und dem oberen Teil der Stangenführung, der die Anschlagfläche 18 bildet, möglich ist. Der obere Teil der Stangenführung kann als Einsatzstück 20 zur Aufnahme eines oder mehrerer Führungsmittel 8 gestaltet sein.

Die Kolbenstangenführung 4 besitzt mehrere Zugangsbohrungen 21, die durch einen Stopfen 22 jeweils verschließbar sind. Nach Entfernen des Stopfens 22 kann ein Werkzeug über die Zugangsbohrung 21 zum Schraubbolzen 16 geführt werden, um die Verstellung des Tragteils, wie beschrieben, zu erreichen. Es versteht sich, daß der konzentrische Zylinderring bzw. das konzentrische Tragteil 12 umfangsseitig verteilt entsprechende Bohrungen zur Aufnahme der jeweiligen Schraubbolzen 16 besitzt und daß im gleichen Maße Gewindebohrungen 17 im Arbeitszylinder 3 eingebracht wurden.

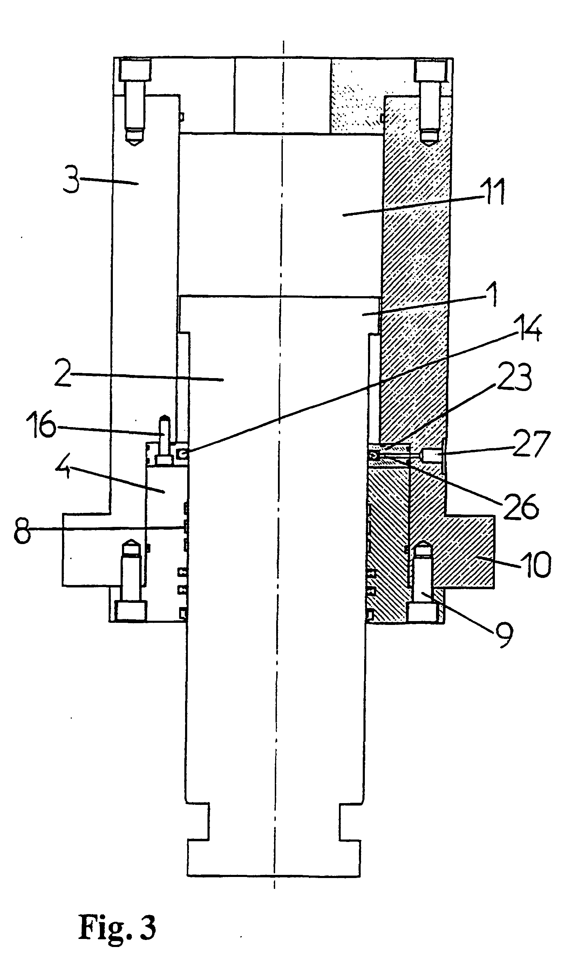

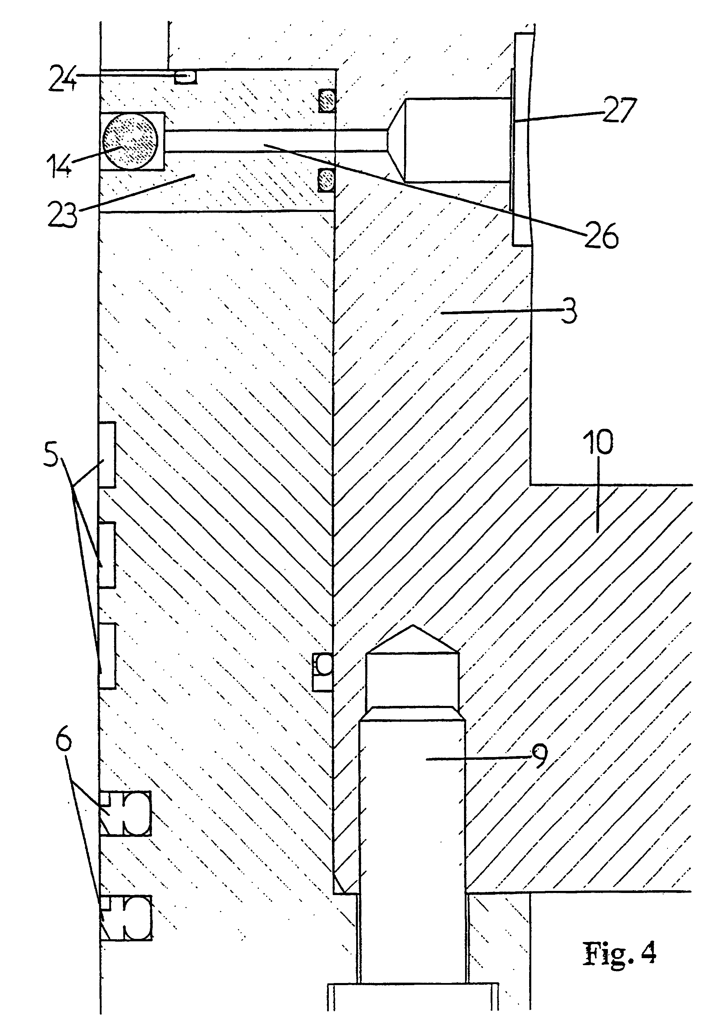

Bei dem weiteren Ausführungsbeispiel nach den Fig. 3 und 4' ist ein Ringtragteil 23 oberhalb der Stangenführung 4 vorgesehen. Das Ringtragteil 23 wird über die Schraubverbindung 9 gemeinsam mit der Stangenführung 4 befestigt, wobei die Abdichtung mit den Dichtelementen 24 gewährleistet ist.

Im Ringtragteil 23 ist ein Ringkanal 25 eingebracht, welcher eine Tiefe zur vollständigen Aufnahme des elastischen Dichtrings 14 besitzt.

Vom Ringkanal 25 erstreckt sich im wesentlichen radial nach außen gerichtet ein Medienzuführkanal 26, der außenseitig in einem Medienanschluß 27, der als Steck- oder Schlauchanschluß ausgebildet sein kann, endet.

Über den Medienanschluß 27 und den Medienzuführkanal 26 kann ein fluides Medium in den Ringkanal 25 gelangen mit der Folge, daß sich der elastische Dichtring 14 in Richtung zur Oberfläche 15 der Kolbenstange bewegt und von seiner Ruheposition 29 in die gewünschte Dichtposition gelangt.

Hinsichtlich der übrigen Funktionen und Elemente sei auf die vorangegangene Beschreibung zu den Fig. 1 und 2 verwiesen, wobei für dieselben Elemente die gleichen Bezugszeichen Verwendung finden.

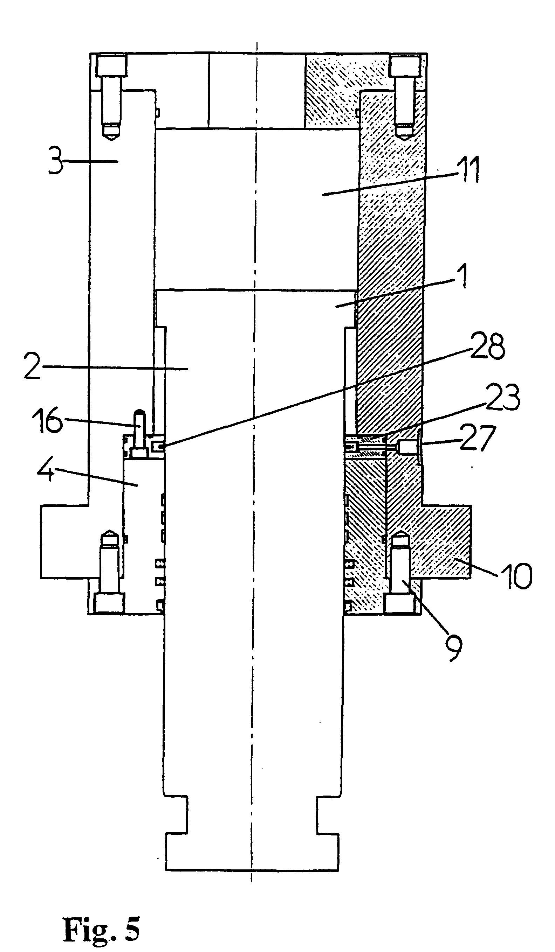

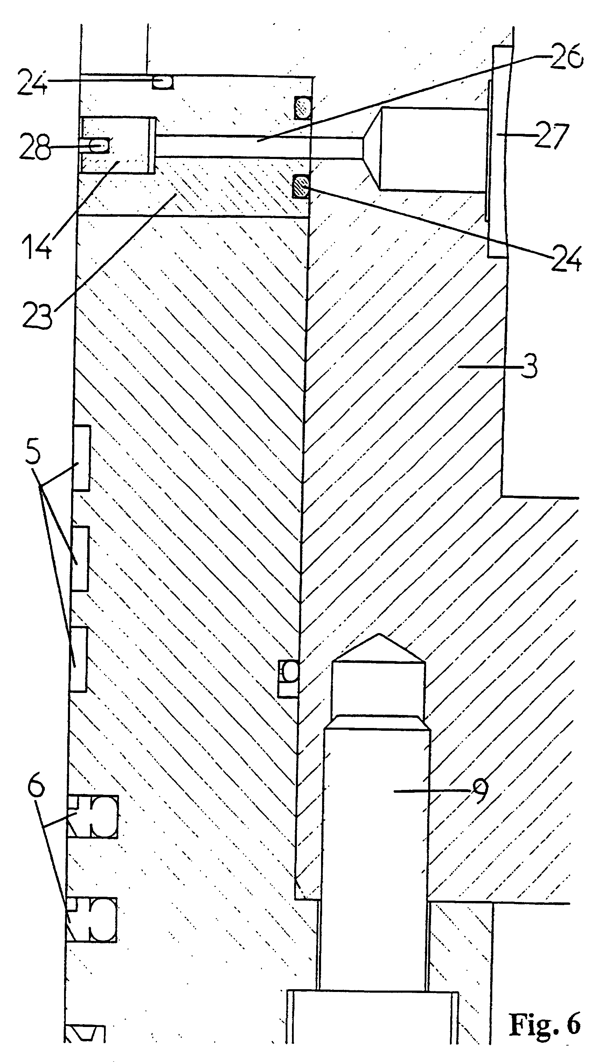

Bei dem weiteren Ausführungsbeispiel nach den Fig. 5 und 6 findet wiederum ein Ringtragteil 23 Verwendung, das oberhalb der Stangenführung 4 angeordnet ist, und wobei im Ringtragteil 23 ein Medienzuführkanal 26 befindlich ist, der auch durch die Wandung des Arbeitszylinders 3 hin zum Medienanschluß 27 führt. Im Gegensatz zur Ausführungsform nach den Fig. 3 und 4 ist jedoch, in Fig. 6 besonders deutlich dargestellt, der elastische Dichtring 14 mit einem vorgespannten Stahlfederring 28 versehen.

Der Stahlfederring 28 spannt den Dichtring 14 radial nach außen vor.

Mit Zuführen eines Mediums über den Medienanschluß 27, d.h. Druckbeaufschlagen der Dichtung 14 mit Stahlfederring 28, wird die Vorspannung des Stahlfederrings überwunden und die Dichtung bewegt sich hin zur Oberfläche 15 der Kolbenstange 2 mit dem gewünschten Dichteffekt. Ein Rückspringen des Stahlfederrings 28 mit der Folge einer entsprechenden Bewegung des Dichtrings 14 kann durch Anlegen eines Vakuums über den Medienanschluß 27 realisiert werden.

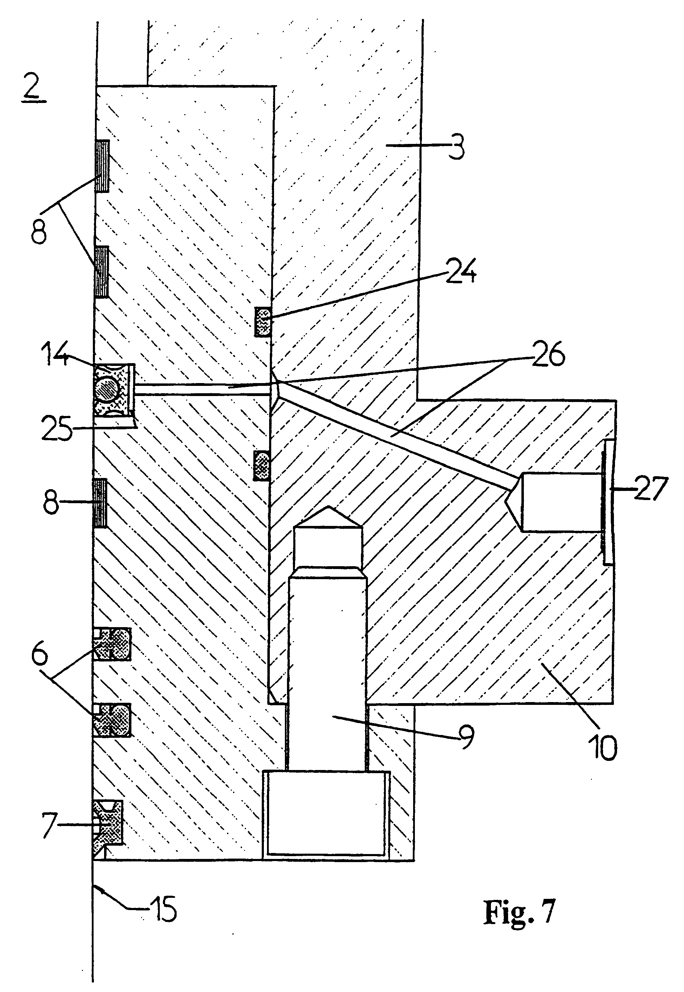

Bei dem Ausführungsbeispiel nach Fig. 7 wird von einer zusätzlichen quasi Notlauf-Dichtung ausgegangen, die sich in einem Ringkanal 25 in der Stangenführung 4 befindet. Diese Dichtung dient, wie dargelegt, dem Gewährleisten eines zusätzlichen Notlaufs dann, wenn plötzliche Leckagen der Primärdichtungen auftreten.

Hierfür ist wiederum ein Medienzuführkanal 26 ausgebildet, der durch die Stangenführung 4 verläuft, in eine Fortführung im Mantel des Arbeitszylinders 3 übergeht und im Medienanschluß 27 endet. Die Funktionen zum Aktivieren des zusätzlichen elastischen Dichtrings 14 entsprechen denjenigen wie zu den Fig. 3 bis 6 geschildet.
Von Vorteil ist, daß für die zusätzlichen elastischen Dichtringe 14 übliche O-Ringe Anwendung finden können, d.h. keine Spezialdichtungen erforderlich werden. Damit kann in besonders kostengünstiger Weise der jeweilige Hydraulikzylinder mit Notlauf- und Reparaturdichteigenschaften versehen werden, so daß sich die Zuverlässigkeit mit derartigen Hydraulikzylindern versehenen Einrichtungen und Maschinen erhöht.

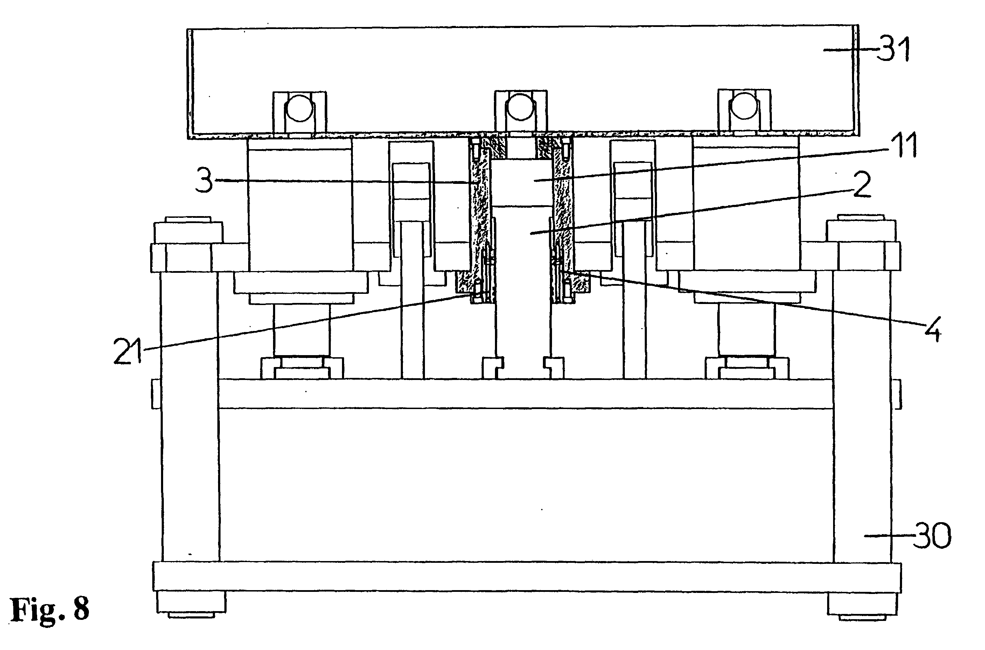

Eine spezielle Verwendung der erfindungsgemäßen Dichtungsvorrichtung für Hydraulikzylinder zeigt die prinzipielle Darstellung einer hydraulischen Oberkolbenpresse gemäß Fig. 8.

Dort befinden sich drei parallel geschaltete Hydraulikzylinder in einem Pressengestell 30, wobei oberhalb des Pressengestells 30 ein Ölvorratsbehälter 31 befindlich ist.

Für den Fall, daß beispielsweise ein Austausch der Kolbenstangenführung 4 aufgrund Undichtigkeiten erforderlich wird, besteht die Möglichkeit, die im jeweiligen Zylinder befindliche zusätzliche Dichtung in der gemäß Fig. 1 und 2 offenbarten Weise zu aktivieren, ohne daß der Ölvorratsbehälter 31 und der Arbeitsraum 11 entleert werden müssen. Montageseitig ist über die verschließbaren Zugangsbohrungen 21 eine leichte Zugänglichkeit der Schraubbolzen 16 (siehe jeweils Fig. 2) gewährleistet.

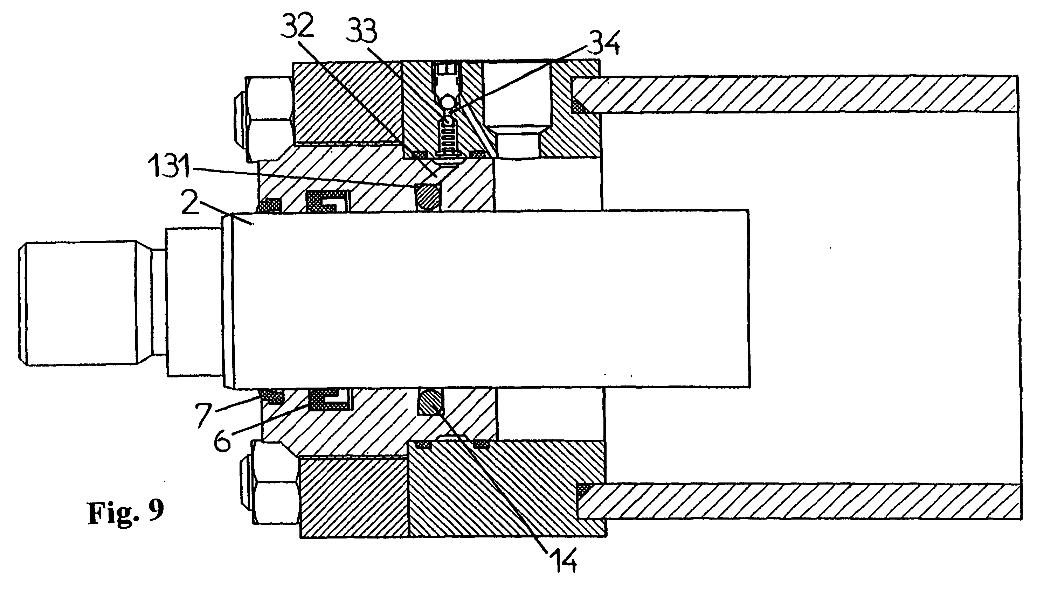

Mit Hilfe der Fig. 9 bis 11 soll ein Ausführungsbeispiel der erfindungsgemäßen Dichtungsvorrichtung unter Rückgriff auf eine konische Ringnut 131 erläutert werden.

Gemäß Fig. 9 ist im Bereich der Kolbenstangenführung 4 eine zusätzliche Nut in Form einer konischen Ringnut 131 z.B. eingefräst. Diese konische Ringnut 131 besitzt eine Breite, die am kolbenstangennahen Ende kleiner als die Breite am kolbenstangenfernen Ende ist. Damit wird durch die geänderten Flächenverhältnisse beim Druckaufbau für eine ausreichende Preßkraft des elastischen Dichtrings 14 Sorge getragen.

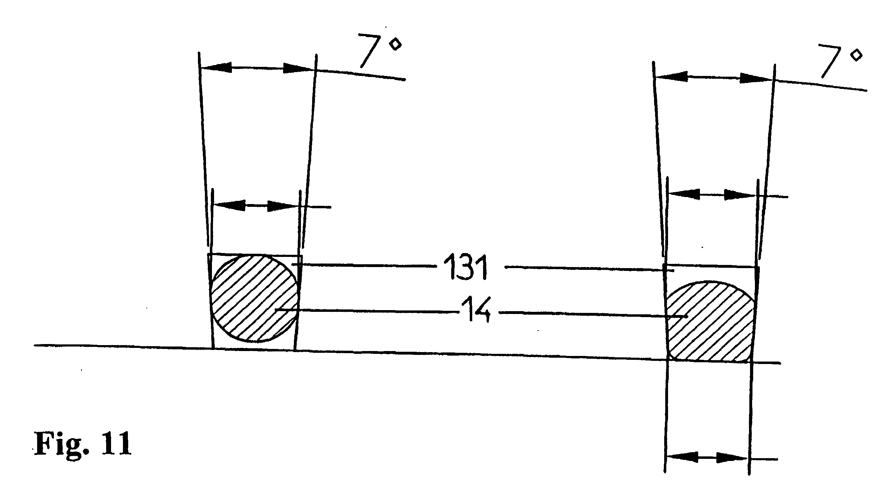

Die Verformung des elastischen Dichtrings 14 beim Druckaufbau ist in der Fig. 11 nachvollziehbar gezeigt.

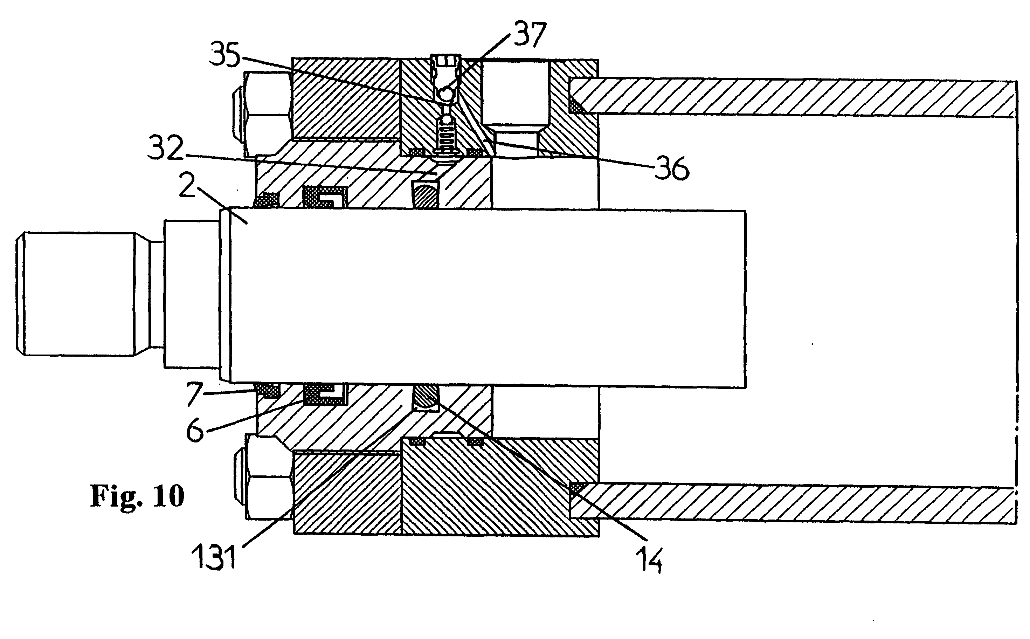

In der Bereitschaftsstellung des weiteren Ausführungsbeispiels nach Fig. 9 befindet sich der elastische Dichtring 14 in Ruheposition. Die Darstellung nach Fig. 10 zeigt die Funktion des elastischen Dichtrings 14, welcher dadurch aktiviert wird, daß das Absperrventil 37 in eine solche Position verstellt ist, daß die Zuführung 36 zur Kammer 35 sich mit unter Betriebsdruck stehender Hydraulikflüssigkeit füllt.

Mit aufbauendem Druck in der Kammer 35 wird die Kraft des Rückschlagventils 33 überwunden, d.h. die Raumöffnung 34 freigegeben. Infolgedessen strömt die Hydraulikflüssigkeit weiter über den Kanal 32 hinein in die konische Ringnut 131, wodurch sich ein Druck auf die Rückseite des Dichtrings 14 aufbaut und eine Kraftwirkung in Richtung Kolbenstange 2 die Folge ist. Das Rückschlagventil 33 sichert die erwünschte Dichtposition des elastischen Dichtrings 14 auch dann, wenn der Betriebsdruck der Hydraulikflüssigkeit z.B. beim Zurückfahren des Kolbens abfällt.
Bei diesem Ausführungsbeispiel ist ein externes Druckmittelzuführen nicht notwendig, wobei durch die Form der konischen Ringnut für ausreichende Kräfte bei gegebenen Druckverhältnissen gesorgt ist.

### Bezugszeichenliste

- 1: Kolben
- 2: Kolbenstange
- 3: Arbeitszylinder
- 4: Kolbenstangenführung
- 5: ringförmige Ausnehmungen in der Stangenführung
- 6: elastische Dichtringe
- 7: Ölabstreifring
- 8: Führungsmittel bzw. Führungsbänder
- 9: Schraubverbindung
- 10: Flansch
- 11: Arbeitsraum
- 12: konzentrischer Zylinderring/Tragteil
- 13: weitere Nut zur Aufnahme eines weiteren elastischen Dichtrings
- 14: weiterer elastischer Dichtring
- 15: Oberfläche der Kolbenstange
- 16: Schraubbolzen
- 17: Gewindebohrung
- 18: Anschlagfläche zum Gegenpressen
- 19: umlaufende Ausnehmung in der Stangenführung für Zylinderring
- 20: Einsatzstück zur Aufnahme eines Kolbenstangenführungsbands
- 21: verschließbare Zugangsbohrung
- 22: Stopfen
- 23: Ringtragteil oberhalb der Stangenführung
- 24: Dichtelemente zwischen Arbeitszylinder und Stangen führung bzw. Zylinderring/Ringtragteil
- 25: Ringkanal in der Stangenführung
- 26: Medienzuführkanal
- 27: Medienanschluß
- 28: Stahlfederring
- 29: Ruheposition
- 30: Pressengestell
- 31: Ölvorratsbehälter
- 131: konische Ringnut
- 32: Kanal
- 33: Rückschlagventil
- 34: Raumöffnung
- 35: Kammer
- 36: Zuführung für Kammer
- 37: Absperrventil

## Patentansprüche

1. Dichtungsvorrichtung für einen mit Druckmittel beaufschlagten Kolben in einem Arbeitszylinder, wobei im oder am Arbeitszylinder eine Kolbenstangenführung angeordnet ist und die Stangenführung ringförmige Ausnehmungen aufweist sowie in den Ausnehmungen jeweils elastische Dichtringe sowie Führungsmittel befindlich sind, in der Stangenführung (4) oder einem zum Druck-'oder Arbeitsraum (11) sich anschließenden, die Kolbenstange (2) konzentrisch umgebenden Zylinderring (12) mindestens eine weitere Nut (13) zur Aufnahme eines weiteren elastischen Dichtrings (14) ausgebildet ist und weiterhin Mittel vorgesehen sind, um auf den weiteren elastischen Dichtring (14) im Bedarfsfall von außen radial zur Kolbenstange (2) gerichtete Kräfte aufzubringen, so daß sich der Dichtring (14) von einer Ruheposition (29) zur Dichtposition bewegt oder verformt,
**dadurch gekennzeichnet, daß**
die weitere Nut als konische Ringnut (131) ausgebildet ist, wobei die Breite der Ringnut (131) am kolbenstangennahen Ende kleiner als die Breite am kolbenstangenfernen Ende ist.

2. Dichtungsvorrichtung nach Anspruch 1,
**dadurch gekennzeichnet, daß**
die Ringnut (131) mit einem Kanal (32) in Verbindung steht, welcher in einen Raum, enthaltend ein Rückschlagventil (33), mündet, wobei das Rückschlagventil (33) eine Raumöffnung (34) federbelastet nach außen verschließt, weiterhin die Räumöffnung (34) in eine Kammer (35) übergeht, die mit unter Betriebsdruck stehender Hydraulikflüssigkeit als Druckmittel füllbar ist, wobei die Zuführung (36) zum Füllen der Kammer (35) mit Hydraulikflüssigkeit über ein Absperrventil (37) oder dergleichen Mittel verschließbar ist.

3. Dichtungsvorrichtung für einen mit Druckmittel beaufschlagten Kolben in einem Arbeitszylinder, wobei im oder am Arbeitszylinder eine Kolbenstangenführung angeordnet ist und die Stangenführung ringförmige Ausnehmungen aufweist sowie in den Ausnehmungen jeweils elastische Dichtringe sowie Führungsmittel befindlich sind, in der Stangenführung (4) oder einem zum Druck- oder Arbeitsraum (11) sich anschließenden, die Kolbenstange (2) konzentrisch umgebenden Zylinderring (12) mindestens eine weitere Nut (13) zur Aufnahme eines weiteren elastischen Dichtrings (14) ausgebildet ist und weiterhin Mittel vorgesehen sind, um auf den weiteren elastischen Dichtring (14) im Bedarfsfall von außen radial zur Kolbenstange (2) gerichtete Kräfte aufzubringen, so daß sich der Dichtring (14) von einer Ruheposition (29) zur Dichtposition bewegt oder verformt,
**dadurch gekennzeichnet, daß**
der Zylinderring (12) in einer umlaufenden Ausnehmung (19) in der Stangenführung (4) angeordnet ist und ein Tragteil für den weiteren elastischen Dichtring (14) bildet, wobei das Tragteil in Kolbenstangen-Axialrichtung verstellbar ist, im Tragteil eine nutförmige Aufnahme für den elastischen Dichtring (14) vorgesehen ist, wobei mit Verstellung des Tragteils der Dichtring (14) an eine Anschlagfläche (18) preßbar ist und sich hierbei gegen die Oberfläche (15) der Kolbenstange (2) drückend verformt.

4. Dichtungsvorrichtung nach Anspruch 3,
**dadurch gekennzeichnet, daß**
die Anschlagfläche (18) Teil eines Einsatzstücks (20) zur Aufnahme eines der Kolbenstangen-Führungsbänder (8) ist.

5. Dichtungsvorrichtung nach Anspruch 3 oder 4,
**dadurch gekennzeichnet, daß**
das Tragteil über eine Schraubbolzenverbindung (16), die sich in ein Zylindergestell oder einen Abschnitt des Arbeitszylinders (3) erstreckt, verstellbar ist, wobei in der Stangenführung (4) verschließbare Zugangsbohrungen (21) zum Schraubbolzen (16) eingebracht sind.

6. Dichtungsvorrichtung nach Anspruch 1 oder 2,
**dadurch gekennzeichnet, daß**
die Nut als Ringkanal (25) in der Stangenführung (4) oder in einem Ringtragteil (23) oberhalb der Stangenführung (4) und mit dieser verbunden ausgebildet ist, und dieser Ringkanal (25) eine Tiefe zur vollständigen Aufnahme des weiteren Dichtrings (14) aufweist, wobei vom Ringkanal (25) sich im wesentlich radial nach außen gerichtet ein Medienzuführkanal (26) erstreckt, wobei der Medienzuführkanal (26) am äußeren Ende einen Medienanschluß (27) besitzt, um über unter Betriebsdruck stehender Hydraulikflüssigkeit den im Ringkanal (25) befindlichen Dichtring (14) bedarfsweise von seiner Ruheposition (29) zur Dichtposition gegen die Oberfläche (15) der Kolbenstange (2) und umgekehrt zu drücken bzw. zu bewegen.

7. Dichtungsvorrichtung nach einem der vorangegangenen Ansprüche,
**dadurch gekennzeichnet, daß**
der oder die weiteren elastischen Dichtringe (14) handelsübliche O-Ringe sind.

8. Dichtungsvorrichtung nach einem der Ansprüche 1 bis 6,
**dadurch gekennzeichnet, daß**
der oder die weiteren elastischen Dichtringe (14) einen vorgespannten Stahlfederring (28) aufweisen, wobei mit Druckbeaufschlagung die Vorspannung überwunden wird und der Dichtring (14) sich von der Ruheposition (29) in die Dichtposition bewegt und verformt.

9. Dichtungsvorrichtung nach einem der vorangegangenen Ansprüche,
**dadurch gekennzeichnet, daß**
der Zylinderring (12) oder das Ringtragteil (23) die Kolbenstange (4) beabstandet umgibt und gemeinsam mit der Stangenführung (4) an oder in einem Gestell oder einem Flanschabschnitt des Arbeitszylinders (3) montiert ist.

10. Verwendung einer Vorrichtung gemäß den Merkmalen nach mindestens einem der Ansprüche 1 bis 9 für eine hydraulische Kolben-, insbesondere Oberkolbenpresse als Notlauf- und/oder Reparaturdichtung.

11. Verwendung einer Vorrichtung gemäß den Merkmalen nach mindestens einem der Ansprüche 1 bis 9 als Notlauf-Dichtung im Falle Undichtigkeit der üblichen Primär-Hydraulikdichtungen.

## Claims

1. A sealing device for a piston acted upon with pressure medium in an operating cylinder, wherein a piston-rod guide is arranged in or on the operating cylinder and the rod guide has annular recesses, and resilient sealing rings and guiding means are present in the recesses in each case, at least one further groove (13) for receiving a further resilient sealing ring (14) is formed in the rod guide (4) or a cylinder ring (12) adjoining the pressure chamber or operating chamber (11) and surrounding the piston rod (2) in a concentric manner, and, in addition, means are provided in order to apply forces - directed from the outside radially to the piston rod (2) - onto the further resilient sealing ring (14) if necessary, so that the sealing ring (14) is moved from a rest position (29) to the sealing position or is deformed, **characterized in that** the further groove is designed in the form of a conical annular groove (131), wherein the width of the annular groove (131) at the end close to the piston rod is smaller than the width at the end remote from the piston rod.

2. A sealing device according to Claim 1, **characterized in that** the annular groove (131) is connected to a duct (32) which opens into a space containing a non-return valve (33), wherein the non-return valve (33) closes an opening (34) into the space in a spring-loaded manner towards the outside, and, in addition, the opening (34) into the space passes into a chamber (35) which can be filled with hydraulic fluid under operating pressure as the pressure medium, wherein the supply means (36) for filling the chamber (35) with hydraulic fluid can be closed by way of a shut-off valve (37) or a similar means.

3. A sealing device for a piston acted upon with pressure medium in an operating cylinder, wherein a piston-rod guide is arranged in or on the operating cylinder and the rod guide has annular recesses, and resilient sealing rings and guiding means are present in the recesses in each case, at least one further groove (13) for receiving a further resilient sealing ring (14) is formed in the rod guide (4) or a cylinder ring (12) adjoining the pressure chamber or operating chamber (11) and surrounding the piston rod (2) in a concentric manner, and, in addition, means are provided in order to apply forces - directed from the outside radially to the piston rod (2) - onto the further resilient sealing ring (14) if necessary, so that the sealing ring (14) is moved from a rest position (29) to the sealing position or is deformed, **characterized in that** the cylinder ring (12) is arranged in a continuous recess (19) in the rod guide (4) and forms a support part for the further resilient sealing ring (14), wherein the support part is displaceable in the axial direction of the piston rod, a groove-shaped receiving means for the resilient sealing ring (14) is provided in the support part, wherein the sealing ring (14) can be pressed against a stop face (18) by displacement of the support part and, during this, is deformed in a pressing manner against the surface (15) of the piston rod (2).

4. A sealing device according to Claim 3, **characterized in that** the stop face (18) is part of an insert member (20) for receiving one of the piston-rod guide belts (8).

5. A sealing device according to Claim 3 or 4, **characterized in that** the support part is displaceable by way of a threaded-bolt connexion (16) which extends into a cylinder stand or a portion of the operating cylinder (3), wherein closable access bores (21) to the threaded bolt (16) are formed in the rod guide (4).

6. A sealing device according to Claim 1 or 2, **characterized in that** the groove is designed in the form of an annular channel (25) in the rod guide (4) or in an annular support part (23) above the rod guide (4) and connected to the latter, and the said annular channel (25) has a depth to receive the further sealing ring (14) completely, wherein a medium-supply duct (26) extends directed essentially radially outwards from the annular channel (25), wherein the medium-supply duct (26) has a connexion (27) for medium at the outer end in order if necessary to push or to move the sealing ring (14) present in the annular channel (25) from its rest position (29) to the sealing position against the surface (15) of the piston rod (2) and *vice versa* by way of hydraulic fluid under operating pressure.

7. A sealing device according to one of the preceding Claims, **characterized in that** the further resilient sealing ring or rings (14) is or are a commercially available O-ring or commercially available O-rings.

8. A sealing device according to one of Claims 1 to 6, **characterized in that** the further resilient sealing ring or rings (14) has or have a pre-stressed steel spring ring (28), wherein the pre-stressing is overcome with the action of pressure and the sealing ring (14) is moved from the rest position (29) into the sealing position and is deformed.

9. A sealing device according to one of the preceding Claims, **characterized in that** the cylinder ring (12) or the annular support part (23) surrounds the piston rod (4) at a distance and is mounted jointly with the rod guide (4) on or in a stand or a flange portion of the operating cylinder (3).

10. Use of a device in accordance with the features according to at least one of Claims 1 to 9 for an hydraulic piston press, in particular a down-stroke press, as an emergency-operation and/or repair seal.

11. Use of a device in accordance with the features according to at least one of Claims 1 to 9 as an emergency-operation seal in the event of leakage in the usual primary hydraulic seals.

## Revendications

1. Dispositif d'étanchéité pour un piston exposé à un agent de pression dans un cylindre de travail, un guidage de tige de piston étant placé dans ou sur le cylindre de travail et le guidage de tige présentant des évidements annulaires, des bagues d'étanchéité élastiques ainsi que des moyens de guidage étant placés à chaque fols dans les évidements, au moins une autre rainure (13) étant formée dans le guidage de tige (4) ou dans une bague de cylindre (12) faisant suite à la chambre de pression ou de travail (11) et entourant la tige de piston (2) de manière concentrique afin de recevoir une autre bague d'étanchéité élastique (14), et des moyens étant encore prévus pour appliquer en cas de besoin des forces dirigées depuis l'extérieur radialement vers la tige de piston (2) sur l'autre bague d'étanchéité élastique (14), de sorte que la bague d'étanchéité (14) se déplace ou se déforme d'une position de repos (29) à la position d'étanchéité,
**caractérisé en ce que** l'autre rainure est conformée en rainure annulaire conique (131), la largeur de la rainure annulaire (131) étant plus petite à l'extrémité proche de la tige de piston que sa largeur à l'extrémité éloignée de la tige de piston.

2. Dispositif d'étanchéité selon la revendication 1, **caractérisé en ce que** la rainure annulaire (131) est en liaison avec un canal (32) qui débouche dans une chambre contenant un clapet anti-retour (33), le clapet anti-retour (33) fermant vers l'extérieur une ouverture de chambre (34) sous l'effet d'un ressort, l'ouverture de chambre (34) menant de plus à une chambre (35) qui peut être remplie avec un liquide hydraulique sous pression de service servant d'agent de pression, l'alimentation (36) servant à remplir la chambre (35) avec le liquide hydraulique pouvant être fermée par une vanne de fermeture (37) ou des moyens similaires.

3. Dispositif d'étanchéité pour un piston exposé à un agent de pression dans un cylindre de travail, un guidage de tige de piston étant placé dans ou sur le cylindre de travail et le guidage de tige présentant des évidements annulaires, des bagues d'étanchéité élastiques ainsi que des moyens de guidage étant placés à chaque fois dans les évidements, au moins une autre rainure (13) étant formée dans le guidage de tige (4) ou dans une bague de cylindre (12) faisant suite à la chambre de pression ou de travail (11) et entourant la tige de piston (2) de manière concentrique afin de recevoir une autre bague d'étanchéité élastique (14), et des moyens encore étant prévus pour appliquer en cas de besoin des forces dirigées depuis l'extérieur radialement vers la tige de piston (2) sur l'autre bague d'étanchéité élastique (14), de sorte que la bague d'étanchéité (14) se déplace ou se déforme d'une position de repos (29) à la position d'étanchéité,
**caractérisé en ce que** la bague de cylindre (12) est placée dans une rainure périphérique (19) ménagée dans le guidage de tige (4) et forme une partie porteuse pour l'autre bague d'étanchéité élastique (14), la partie porteuse étant mobile dans la direction axiale de la tige de piston, un évidement en forme de rainure étant prévu dans la partie porteuse pour la bague d'étanchéité élastique (14), la bague d'étanchéité (14) pouvant être pressée contre une surface d'appui (18) par le déplacement de la partie porteuse et se déformant alors par écrasement contre la surface (15) de la tige de piston (2).

4. Dispositif d'étanchéité selon la revendication 3, **caractérisé en ce que** la surface d'appui (18) fait partie d'un insert (20) servant à recevoir l'une des bandes de guidage de tige de piston (8).

5. Dispositif d'étanchéité selon la revendication 3 ou 4, **caractérisé en ce que** la partie porteuse est mobile par l'intermédiaire d'un assemblage à boulon (16) qui s'étend dans un bâti de cylindre ou une section du cylindre de travail (3), des perçages d'accès (21) à obturation étant logés dans le guidage de tige (4) pour le boulon (16).

6. Dispositif d'étanchéité selon la revendication 1 ou 2, **caractérisé en ce que** la rainure est conformée en canal annulaire (25) dans le guidage de tige (4) ou dans une partie porteuse annulaire (23) au-dessus du guidage de tige (4) et en liaison avec celui-ci, et ce canal annulaire (25) présente une profondeur prévue pour recevoir complètement l'autre bague d'étanchéité (14), un canal d'arrivée de fluide (26) s'étendant sensiblement radialement vers l'extérieur depuis le canal annulaire (25), le canal d'arrivée de fluide (26) possédant un branchement de fluide (27) à son extrémité extérieure afin, par l'intermédiaire du liquide hydraulique sous pression de service, de comprimer ou de déplacer si nécessaire la bague d'étanchéité (14) située dans le canal annulaire (25) de sa position de repos (29) à la position d'étanchéité contre la surface de la tige de piston (2), et inversement.

7. Dispositif d'étanchéité selon l'une des revendications précédentes, **caractérisé en ce que** la ou les bagues d'étanchéité élastiques supplémentaires (14) sont des joints toriques du commerce.

8. Dispositif d'étanchéité selon l'une des revendications 1 à 6, **caractérisé en ce que** la ou les bagues d'étanchéité élastiques supplémentaires (14) présentent une bague ressort en acier (28) précontrainte, la précontrainte étant surmontée par l'exposition à la pression et la bague d'étanchéité (14) se déplaçant et se déformant alors de la position de repos (29) à la position d'étanchéité.

9. Dispositif d'étanchéité selon l'une des revendications précédentes, **caractérisé en ce que** la bague de cylindre (12) ou la partie porteuse annulaire (23) entoure à distance la tige de piston (4) et est montée conjointement avec le guidage de tige (4) sur ou dans un bâti ou une section de bride du cylindre de travail (3).

10. Utilisation d'un dispositif présentant les caractéristiques d'au moins l'une des revendications 1 à 9 pour une presse à piston hydraulique, en particulier à une presse descendante, en tant que joint d'étanchéité d'urgence et/ou de réparation.

11. Utilisation d'un dispositif présentant les caractéristiques d'au moins l'une des revendications 1 à 9 comme joint d'étanchéité d'urgence en cas de perte d'étanchéité des joints hydrauliques primaires conventionnels.
